# EUROPÄISCHE PATENTSCHRIFT

(11) **EP 1 848 932 B1**
(45) Veröffentlichungstag und Bekanntmachung des Hinweises auf die Patenterteilung: **05.10.2011**
(21) Anmeldenummer: 05849514.4
(22) Anmeldetag: 28.12.2005
(51) Int. Cl.: F24J 2/52

(54) **GESTELL ZUR ANORDNUNG VON SOLARMODULEN**
FRAME ASSEMBLY FOR MOUNTING SOLAR MODULES
BATI POUR MONTER DES MODULES SOLAIRES

(30) Priorität: 14.02.2005 DE 102005007184
(43) Veröffentlichungstag der Anmeldung: 31.10.2007
(73) Patentinhaber: Mounting Systems GmbH, 15834 Rangsdorf (DE)
(72) Erfinder: GENSCHOREK, Gido, 15834 Rangsdorf (DE)
(74) Vertreter: Kietzmann, Manfred
(86) Internationale Anmeldenummer: PCT/DE2005/002332
(87) Internationale Veröffentlichungsnummer: WO 2006/086937

(56) Entgegenhaltungen:
- DE-A1-102004 010 515
- DE-U1- 29 703 481
- FR-A- 2 494 408

## Beschreibung

Die Erfindung betrifft ein Gestell zur Anordnung von Solarmodulen insbesondere auf Flachdächern. Derartige Gestelle können auch auf anderen ebenen oder wenig geneigten Flächen genutzt werden.

Es sind Traganordnungen bekannt, die aus einem Grundkörper mit dreieckigen oder trapezförmigen Querschnitt bestehen, wobei die Solarmodule auf der zur Dach- oder Bodenebene geneigten Fläche angeordnet werden.

So wird in der EP 0 857 926 A1 eine Plastikwanne beschrieben, die einen im wesentlichen dreieckigen Querschnitt zur geneigten Aufnahme eines oder mehrere Solarmodule aufweist. Ähnlich aufgebaut sind die Traganordnungen nach DE 200 08 509 U1 bestehend aus Beton und nach DE 201 17 280 U1 mit einem Grundkörper aus einem wärmedämmenden Stoff.

Aus der EP 1 376 029 A2 ist eine Traganordnung bekannt, die kein geschlossenes Trägergerüst ausweist, sondern aus einem mehrfach in der Ebene abgekanteten Bleche besteht, wobei eine schräge Auflägefläche für den Solarmodul vorhanden ist. Die abgekanteten Bleche übernehmen jeweils die Stützfunktion oben und unten für den Solarmodul.

Weiterhin sind Gestelle bekannt, an denen der Solarmodul verstellbar angeordnet ist.
So beschreibt die US-PS 5 228 924 ein Dreieckgestell mit mindestens zwei nebeneinander angeordneten Dreiecken, die an der Dreiecksspitze mit einer Drehachse miteinander verbunden sind, um die dann das eigentliche Traggestell für den Solarmodul schwenkbar angeordnet ist. Die Dreiecksgestelle sind mit der Dachhaut verschraubt oder auf einer massiven Unterlage fixiert. Anstelle der Verschraubung verwendet die Tragkonstruktion nach DE 199 63 545 G2 magnetische Kraftfelder.

Darüber hinaus ist aus der DE 199 22 795 A1 im Flachdach-/ Bodengestell bekannt, das eine halbkreisförmige, mit einer Rinne ausgestattete Modulhalteeinrichtung besitzt. Der Solarmodul ist in der Rinne verschiebbar und so mit unterschiedlichem Ausstellwinkel fixierbar.

Nachteilig bei diesen Gestellen ist, das die Auflageprofile, um die Befestigung der Solarmodule zu gewährleisten, Spezialprofile sind. Die Befestigung der Solarmodule erfolgt gewöhnlich nur an wenigen Punkten, so dass eigentliche ein Spezialprofil über die genannte Modullänge bzw. Breite nicht benötigt wird.
Hinzu kommt, das es eine Vielzahl, unterschiedliche Abmaße aufweisende Solarmodule gibt, so dass jedes Gestell an diese Abmaße angepasst werden muss.

Aus der DE 297 03 481 U1 ist ein Gestell zur Anordnung von Solarmodulen bekannt, das aus mindestens zwei beabstandet voneinander angeordneten flächigen Rahmen besteht, die jeweils aus miteinander verbundenen Rahmenseiten zusammengesetzt sind, wobei auf der zur Boden- oder Dachfläche geneigt ausgebildeten Rahmenseite Tragprofilstücke zur Abstützung und Fixierung eines Solarmoduls angeordnet sind, die Rahmenseiten beweglich zueinander und fixierbar miteinander verbunden sind oder mindestens eine Längenverstelleinrichtung aufweisen und eine Rahmenseite über einen oder mehrere Anschlüsse zu einer Dach- oder Bodenfläche verfügt. Die Rahmenseiten sind dabei als Doppelhohlschienen, die gegeneinander verschiebbar und miteinander fixierbar sind, ausgeführt.

Aufgabe der Erfindung ist es, insbesondere ein im Querschnitt dreiecksförmiges Gestell zur Anordnung von Solarmodulen vorzuschlagen, das eine hohe Flexibilität in der Anpassung an unterschiedliche Solarmodule aufweist.

Gelöst wird diese Aufgabe mit den Merkmalen des Anspruches 1, vorteilhafte Ausgestaltungen sind Gegenstand der Unteransprüche.

Das erfindungsgemäße Gestell zur Anordnung von Solarmodulen besteht aus mindestens zwei beabstandet voneinander angeordneten flächigen Rahmen mit Rahmenseiten, wobei jeweils eine Rahmenseite zur Boden- oder Dachfläche geneigt ausge-bildet ist, auf der geneigten Rahmenseite jeweils verschiebbar und fixierbar Tragprofilstücke zur Abstützung und Fixierung eines Solarmoduls angeordnet sind, die Tragprofilstücke jeweils mit einer der zur Rahmenseite benachbart angeordneten Rahmenseite verbunden sind, nicht geneigte Rahmenseiten beweglich zueinander und fixierbar miteinander verbunden sind und/oder mindestens eine Längenverstelleinrichtung aufweisen und von diesen Rahmenseiten eine über einen oder mehrere Anschlüsse zu einer Dach- oder Bodenfläche verfügt. In einer bevorzugten Ausführung bilden die Rahmenseiten einen Dreiecksrahmen, vorzugweise eines rechtwinkligen Dreiecks, oder sie bilden einen trapezförmigen Rahmen. Dabei sind die Tragprofilstücke jeweils im Endbereich der jeweiligen Rahmenseite angeordnet, derart, dass einige sich jeweils teilweise über das Ende der Rahmenseite hinaus und umgekehrt auf dieser verschieben lassen. Die Rahmenseitenlänge lässt sich so in Grenzen vergrößern oder verkürzen. Gleichzeitig dienen die Tragprofilstücke der Verbindung benachbarter Rahmenseiten. Bei einer derartigen Anordnung können die Rahmenseiten aus einfachen und dadurch preisgünstigen Profilen bestehen, wie aus einem Winkel-U- oder T-Profil.

Als Tragprofil ist durchgängig in der bevorzugten Ausführung ein T-Profil vorgesehen, dessen Steg im Übergangsbereich zum Fuß als U-Profil ausgebildet ist und zusammen mit dem Fuß ein Kastenprofil bildet. Das Kastenprofil ist in seinen Innenmaßen so ausgelegt, dass das jeweilige Profil der Rahmenseite in das Kastenprofil unter leichtem Spiel einschiebbar und dann fixierbar ist.

Die Verbindung von als T-Profil ausgebildeten Tragprofilen untereinander und von einem T-Profil mit einer Rahmenseite erfolgt bevorzugt jeweils im Stegbereich des oder der T-Profile.

Das vorgeschlagene Gestell weist so wesentliche Vorteile auf. Es können gegenüber herkömmlichen Gestellen mindestens 50 % Materialeinsparung realisiert werden, vor allem dadurch, dass die Rahmenseiten zur Auflage der Solarmodule nunmehr keine Spezialprofile wie die Tragprofilstücke sein müssen.

Es stehen lagerfähige und damit abrufbare Produkte zur Verfügung. Spezialanfertigungen entfallen, denn die an Häufigsten verwendeten Solarmodule in der Breite von 800 - 1100 mm sind durch die dem Gestell gegebene Flexibilität, einmal durch das Verschieben der Tragprofile und weiterhin durch den Wechsel der Rahmenseite für die Auflage des Solarmoduls durch Drehen des Gestells in der Gestellebene, montierbar.

Darüber hinaus müssen nur noch Kleinteile, nämlich die T-Profilstücke bearbeitet werden, was technologisch problemlos mittels kleiner Automaten realisierbar ist.

Eine vorteilhafte Ausführung des Gestells soll anhand der Zeichnungen erläutert werden. Es zeigen:
Fig. 1 ein dreieckiges Rahmengestell,
Fig. 2 die Verbindung zweier Tragprofile und
Fig. 3 und 4 jeweils eine Verbindung von Tragprofil und Rahmenseite.

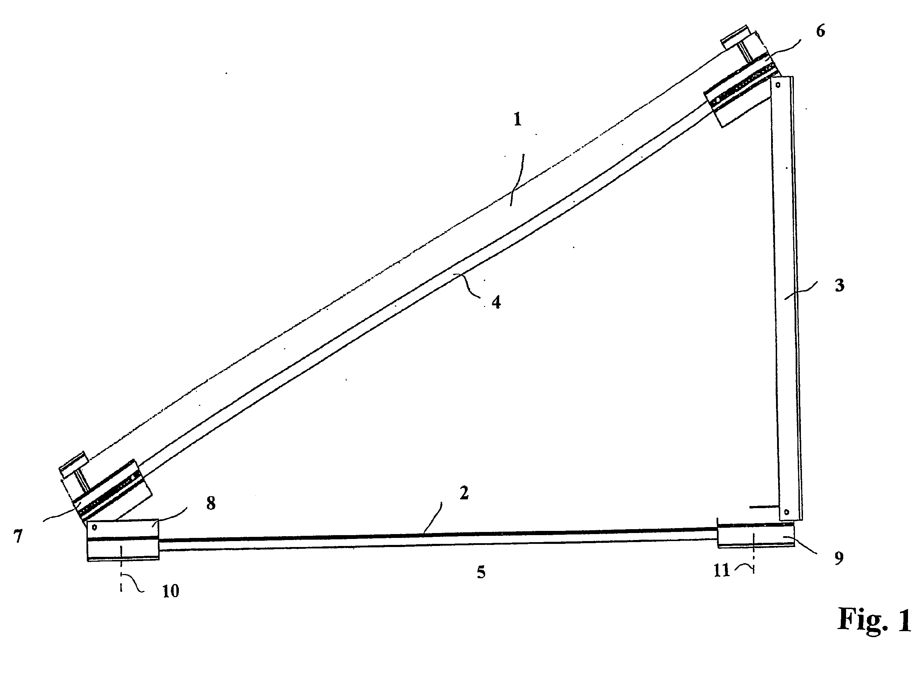

Fig. 1 zeigt ein als Dreiecksrahmen ausgebildetes Gestell zur Anordnung von Solarmodulen 1. Derartige Gestelle werden beabstandet voneinander angeordnet, so dass sich der Solarmodul 1 auf mindestens zwei Dreiecksrahmen abstützen kann. Jeder Dreiecksrahmen besteht aus den Rahmenseiten 2, 3, 4, wobei die Rahmenseite 4 zur Boden- oder Dachfläche 5 geneigt ist. Auf der geneigten Rahmenseite 4 sind verschiebbar und fixierbar zwei Tragprofilstücke 6, 7 zur Abstützung und Fixierung des Solarmoduls 1 angeordnet. Diese Tragprofilstücke 6, 7 werden gleichzeitig genutzt, um eine Verbindung zu den beiden anderen Rahmenseiten 2, 3 herzustellen. Dabei ist das Tragprofil 7 mit einem Tragprofil 8, das auf der Rahmenseite 2 verschieb- und fixierbar angeordnet ist, verbunden und das Tragprofil 6 direkt mit der Rahmenseite 3. Weiterhin weist die Rahmenseite 2 am anderen Ende ein weiteres verschieb- und fixierbares Tragprofil 9 auf, das ebenfalls direkt mit der Rahmenseite 3 verbunden ist. Diese Anordnung gewährleistet, dass durch ein Verschieben der Tragprofile 6, 7 die Rahmenseite 4 in Grenzen bezüglich der Länge verändert werden kann, nämlich um ca. 2/3 der Länge der Tragprofile 6, 7, wobei sich auch die Tragprofile 8, 9 verschieben und ggf. die Winkel zwischen den Rahmenseiten 2, 4; 4, 3 und 2, 3 verändern.
In einer vorteilhaften Ausgestaltung verfügen die Rahmenseiten 2 und/oder 3 auch noch über eine Längenverstelleinrichtung.
Die Rahmenseiten 2 und 4 sind bei dieser Ausführung Winkelprofile während das Rahmenprofil 3 aus einem T-Profil besteht. Das T-Profil hat den Vorteil, dass jeweils die Hälfte einer Fußbreite zur Befestigung einer Verkleidung genutzt werden kann.

Aus der Fig. 1 ist ebenfalls ersichtlich, dass die Rahmenseiten 2 und 4 vom Aufbau her mit den aufgeschobenen Tragprofilen 9, 10 und 6, 7 gleich sind. Die Rahmenseite 2 ist dabei allerdings kürzer als die Rahmenseite 4.
Durch Drehung des Gestells in der Gestellebene lassen sich somit die Rahmenseiten 2 uns 4 bezogen auf die Lage austauschen. Die Befestigung des Gestells auf der Dach- oder Bodenfläche 5 erfolgt dann über die Tragprofile 6, 7 während die Tragprofile 8, 9 zur Auflage des Solarmoduls 1 dienen. Damit steht ein weiteres Abmaß zuzüglich der möglichen Verschiebung der Tragprofile 8, 9 für zu montierende Solarmodule 1 zur Verfügung, ohne dass es einer Veränderung des Gestelles bedarf.

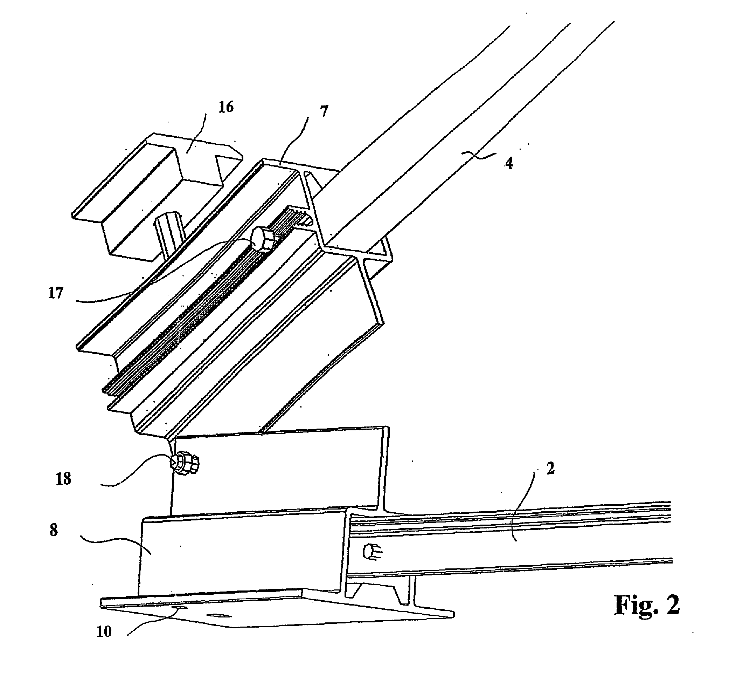

Fig. 2 zeigt, dass die Verbindung des Tragprofilstückes 7 mit der Rahmenseite 2 über ein verschieb- und fixierbar auf der Rahmenseite 2 angeordnetes Tragprofilstück 8 erfolgt, das mit dem Tragprofilstück 7 mittels einer Schraubverbindung 18 verbunden ist. Weiterhin wird gezeigt, dass das Tragprofilstück 7 über eine Solarmodulklemme 16 und ein Schraubelement 17 verfügt.

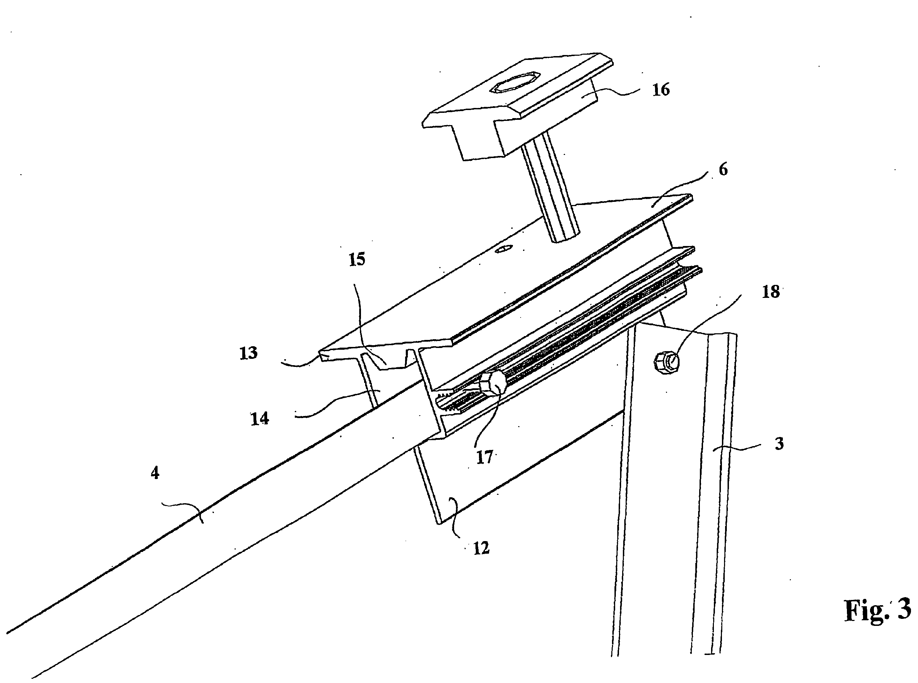

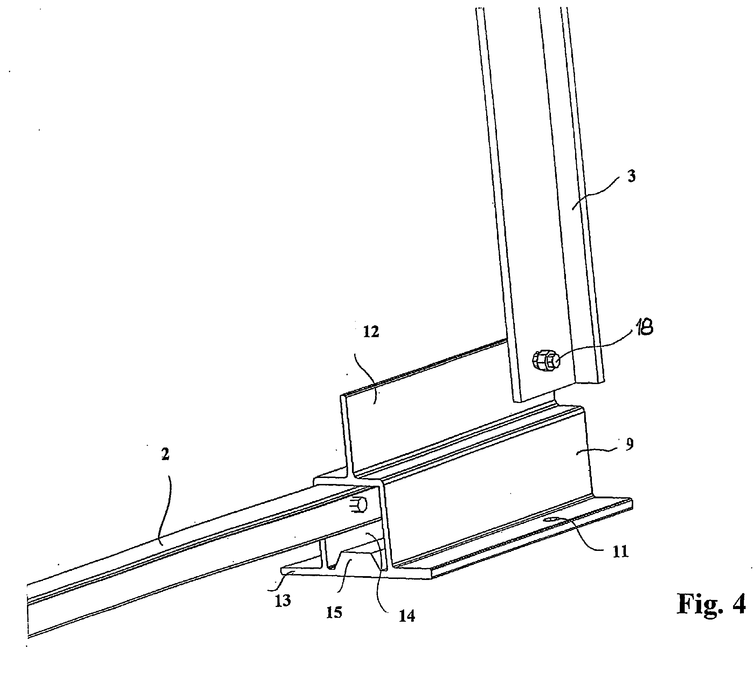

Die Fig. 3 und 4 zeigen in analoger Weise die Verbindung des Tragprofilstückes 6 bzw. 9 mit der Rahmenseite 3.

Die Tragprofile 6, 7, 8, 9 sind ein Spezialprofil, nämlich ein T-Profil, dessen Steg 12 im Übergangsbereich zum Fuß 13 als U-Profil ausgebildet ist und zusammen mit dem Fuß 13 ein Kastenprofil 14 bildet. Das Kastenprofil 14 ist in seinen Innenmaßen so ausgelegt, dass das jeweilige Profil der Rahmenseite 2, 3, 4 in das Kastenprofil 14 unter leichtem Spiel einschiebbar und dann fixierbar ist.

Jeweils auf etwas weniger als einem halben Fuß 13 der Tragprofile 6, 7 stützt sich ein Solarmodul 1 ab und wird durch eine mittig im Fuß 13 angeordnete Solarmodulklemme 16 fixiert. Der Fuß 13 weist mittig in das Kastenprofil 14 hineinragend eine Verdickung 15 auf, so dass das Gewinde für die Solarmodulklemme 16 eine ausreichende Festigkeit gegen Ausreißen besitzt.

Die Verbindung von als T-Profil ausgebildeten Tragprofilen 6, 7, 8, 9 untereinander und von einem T-Profil mit einer Rahmenseite 3 erfolgt jeweils im Stegbereich des T-Profils.

### Bezugszeichenliste

- 1: Solarmodul
- 2: Rahmenseite
- 3: Rahmenseite
- 4: Rahmenseite
- 5: Dach- oder Bodenfläche
- 6: Tragprofilstück
- 7: Tragprofilstück
- 8: Tragprofilstück
- 9: Tragprofilstück
- 10: Anschluss
- 11: Anschluss
- 12: Steg
- 13: Fuß
- 14: Kastenprofil
- 15: Verdickung
- 16: Solarmodulklemme
- 17: Befestigungselement
- 18: Schraubverbindung

## Patentansprüche

1. Gestell zur Anordnung von Solarmodulen (1) bestehend aus mindestens zwei beabstandet voneinander angeordneten flächigen Rahmen jeweils bestehend aus miteinander verbundenen Rahmenseiten (2, 3, 4), wobei jeweils eine Rahmenseite zur Boden- oder Dachfläche geneigt ausgebildet ist, wobei auf zwei benachbarten Rahmen jeweils auf der zur Boden- oder Dachfläche (5) geneigt ausgebildeten Rahmenseite (4) Tragprofilstücke (6, 7) zur Abstützung und Fixierung eines Solarmoduls (1) angeordnet sind, wobei die Trageprofilstücke (6,7) jeweils verschiebbar und fixierbar auf der geneigten Rahmenseite (4) angeordnet sind, und eine Rahmenseite (2) über einen oder mehrere Anschlüsse (10, 11) zu einer Dach- oder Bodenfläche (5) verfügt,
**dadurch gekennzeichnet, dass**
die Tragprofilstücke (6, 7) jeweils mit einer der zur geneigten Rahmenseite (4) benachbart angeordneten Rahmenseiten (2, 3) verbunden sind und dass die
Rahmenseiten (2,3)
beweglich zweinander und fiscierbar miteinander verbunden sind oder mindestens eine Längenverstelleinrichtung aufweisen.

2. Gestelle nach Anspruch 1, **dadurch gekennzeichnet, dass**,
die Rahmenseiten (2, 3, 4) einen Dreiecksrahmen, vorzugsweise eines rechtwinkligen Dreiecks, bilden.

3. Gestell nach Anspruch 1 oder 2, **dadurch gekennzeichnet, dass**
die Trageprofilstücke (6, 7) jeweils im Endbereich der zur Abstützung und Fixierung eines Solarmoduls (1) die-nenden Rahmenseite (4) angeordnet sind, derart, dass sie sich jeweils teilweise über das Ende der Rahmenseite (4) hinaus auf dieser verschieben lassen.

4. Gestell nach einem der Ansprüche 1 bis 3, **dadurch gekennzeichnet, dass**,
die Verbindung des auf der Rahmenseite (4), die zur Abstützung und Fixierung des Solarmoduls (1) dient, angeordneten Tragprofilstückes (7) mit der Rahmenseite (2), über die die Dach- oder Bodenbefestigung erfolgt, mittels eines verschiebbar auf der Rahmenseite (2) angeordnetes Tragprofilstückes (8) erfolgt.

5. Gestell nach einem der Ansprüche 1 bis 4, **dadurch gekennzeichnet, dass**,
die Verbindung zwischen der Rahmenseiten (2), über die die Dach- oder Bodenbefestigung erfolgt, und der nicht an der Dach- oder Bodenfläche zu befestigen Rahmenseite (3) durch ein Tragprofilstück (9) gebildet ist, das auf der Rahmenseite (2), über die die Dach-oder Bodenbefestigung erfolgt, verschiebbar und mit der nicht an der Dach- oder Bodenfläche zu befestigen Rahmenseite (3) fest verbunden ist.

6. Gestell nach einem der Ansprüche 1 bis 5, **dadurch gekennzeichnet, dass**,
die Verbindung des Tragprofilstückes (6) der Rahmenseite (4), die zur Abstützung und Fixierung des Solarmoduls (1) dient, mit der nicht an der Dach- oder Bodenfläche zu befestigen Rahmenseite (3) beweglich und fixierbar ist.

7. Gestell nach einem der Ansprüche 1 bis 6, **dadurch gekennzeichnet, dass**,
die Rahmenseiten (2, 3, 4) jeweils ein Winkel- oder U-Profil oder T-Profil sind.

8. Gestell nach einem der Ansprüche 1 bis 7, **dadurch gekennzeichnet, dass**,
das jede Tragprofilstück (6, 7, 8, 9) ein T-Profil ist, dessen Steg (12) im Übergangsbereich zum Fuß (13) als U-Profil ausgebildet ist und zusammen mit dem Fuß (13) ein Kastenprofil (14) bildet.

9. Gestell nach Anspruch 8, **dadurch gekennzeichnet, dass**,
das Kastenprofil (14) in seinen Innenmaßen so ausgelegt ist, dass das jeweilige Profil der Rahmenseite (2, 3, 4) in das Kastenprofil (14) unter leichtem Spiel einschiebbar und fixierbar ist.

10. Gestell nach Anspruch 8 oder 9, **dadurch gekennzeichnet, dass**,
sich jeweils ein Solarmodul (1) auf etwas weniger als einem halben Fuß (13) abstützt und durch eine mittig im Fuß (13) angeordnete Solarmodulklemme (16) fixiert ist.

11. Gestell nach einem der Ansprüche 8 bis 10, **dadurch gekennzeichnet, dass**
der Fuß (13) mittig in das Kastenprofil (14) hineinragend eine Verdickung (15) aufweist.

12. Gestell nach einem der Ansprüche 1 bis 11, **dadurch gekennzeichnet, dass**
die Verbindung der als T-Profil ausgebildeten Tragprofilstücke (6, 7, 8, 9) untereinander und von einem T-Profil mit einer Rahmenseite (3) jeweils im Stegbereich des T-Profils erfolgt.

13. Gestell nach Anspruch 7, **dadurch gekennzeichnet, dass**
die nicht an der Dach- oder Bodenfläche (5) befestigte Rahmenseite (3) ein T-Profil ist, wobei jeweils die Hälfte einer Fußbreite zur Befestigung einer Verkleidung dient.

14. Gestell nach einem der Ansprüche 2 bis 13, **dadurch gekennzeichnet, dass**
durch Verdrehen des Dreieckgestells bestehend aus den Rahmenseite (2, 3, 4) in der Gestellebene die bisherige Rahmenseite (2) für die Befestigung an der Dach- oder Bodenfläche (5) als Rahmenseite für die Befestigung des Solarmoduls (1) dient und umgekehrt.

## Claims

1. A frame structure for arranging solar panels (1), consisting of at least two flat frames which are arranged at a distance from each other and each of which consists of frame sides (2, 3, 4) that are connected to each other, wherein one frame side is designed so as to be inclined relative to the ground or roof surface (5) in each case, wherein profiled support pieces (6, 7) for supporting and positionally fixing a solar panel (1) are arranged on two adjacent frames, on the frame side (4) that is designed so as to be inclined relative to the ground or roof surface (5) in each case, wherein each of the profiled support pieces (6, 7) is arranged on the inclined frame side (4) in such a manner that it can be slidably moved as well as be fixed in position thereon and one frame side (2) is provided with one or several connectors (10, 11) to a roof or ground surface (5),
**characterized in that**
each of the profiled support pieces (6, 7) is connected to one of the frame sides (2, 3) which are arranged adjacent to the inclined frame side (4) and that the frame sides (2, 3) are connected to each other in such a manner that they can be moved relative to each other as well as be fixed in position or comprise at least one length adjustment device.

2. A frame structure according to claim 1, **characterized in that** the frame sides (2, 3, 4) form a triangular frame, preferably of a right-angled triangle.

3. A frame structure according to claim 1 or 2, **characterized in that**
each of the profiled support pieces (6, 7) is arranged in the end area of the frame side (4) which serves to support and positionally fix a solar panel (1), in such a manner that they can be slidably moved on the frame side (4), partially beyond the end thereof, in each case.

4. A frame structure according to any one of claims 1 to 3, **characterized in that**
the connection between the profiled support piece (7) that is arranged on the frame side (4) which serves to support and positionally fix the solar panel (1) and the frame side (2) where the frame structure is attached to the roof or ground is made by means of a profiled support piece (8) that is slidably arranged on the frame side (2).

5. A frame structure according to any one of claims 1 to 4, **characterized in that**
the connection between the frame side (2) where the frame structure is attached to the roof or ground and the frame side (3) which is not intended for attachment to the roof or ground surface is achieved by means of a profiled support piece (9) which is slidable on the frame side (2) where the frame structure is attached to the roof or ground and is fixedly connected to the frame side (3) which is not intended for attachment to the roof or ground surface.

6. A frame structure according to any one of claims 1 to 5, **characterized in that**
the connection between the profiled support piece (6) of the frame side (4) which serves to support and positionally fix the solar panel (1) and the frame side (3) which is not intended for attachment to the roof or ground surface can be moved as well as be fixed in position.

7. A frame structure according to any one of claims 1 to 6, **characterized in that**
each of the frame sides (2, 3, 4) has an angled or U-shaped or T-shaped profile.

8. A frame structure according to any one of claims 1 to 7, **characterized in that**
each profiled support piece (6, 7, 8, 9) has a T-shaped profile, wherein the T's leg (12) is designed with a U-shaped profile in the area of transition to the foot (13), thus forming a box-shaped profile (14) together with the foot (13).

9. A frame structure according to claim 8, **characterized in that**
the inside dimensions of the box-shaped profile (14) are selected such that the relevant profile of the frame side (2, 3, 4) can be inserted in the box-shaped profile (14) with little play and be fixed in position.

10. A frame structure according to claim 8 or 9, **characterized in that**
one solar panel (1) is supported on somewhat less than half a foot (13) and is fixed in position by means of a solar panel clamp (16) which is arranged at the centre of the foot (13).

11. A frame structure according to any one of claims 8 to 10, **characterized in that**
the foot (13) comprises a thickened portion (15) which projects into the box-shaped profile (14) at the centre thereof.

12. A frame structure according to any one of claims 1 to 11, **characterized in that**
the connections of the profiled support pieces (6, 7, 8, 9) having a T-shaped profile to each other and between one T-shaped profiled piece and a frame side (3) are made in the area of the leg of the T-shaped profile in each case.

13. A frame structure according to claim 7, **characterized in that**
the frame side (3) which is not attached to the roof or ground surface (5) has a T-shaped profile, wherein half of the width of the foot serves to attach a cover in each case.

14. A frame structure according to any one of claims 2 to 13, **characterized in that**
if the triangular frame structure consisting of the frame sides (2, 3, 4) is turned around in the frame structure's plane, the frame side (2) which so far has served for attachment to the roof or ground surface (5) will serve as the frame side intended for attachment of the solar panel (1) and vice versa.

## Revendications

1. Bâti pour la disposition de modules solaires (1), composé d'au moins deux cadres plans disposés à distance l'un de l'autre et composés respectivement de côtés de cadre (2, 3, 4) raccordés les uns aux autres, un côté de cadre étant respectivement constitué de façon inclinée par rapport à la surface de sol ou de toit, des pièces profilées porteuses (6, 7) destinées à supporter et à fixer un module solaire (1) étant disposées sur deux cadres voisins respectivement sur le côté de cadre (4) constitué de façon inclinée par rapport à la surface de sol ou de toit, les pièces profilées porteuses (6, 7) étant disposées respectivement de façon mobile et fixable sur le côté de cadre (4) incliné, et un côté de cadre (2) disposant d'un ou de plusieurs raccordements (10, 11) à une surface de toit ou de sol (5),
**caractérisé en ce que**
les pièces profilées porteuses (6, 7) sont raccordées respectivement à un des côtés de cadre (2, 3) disposés au voisinage du côté de cadre (4) incliné, et **en ce que** les côtés de cadre (2, 3) sont raccordés l'un à l'autre de façon mobile l'un par rapport à l'autre et de façon fixable ou présentent au moins un équipement de déplacement longitudinal.

2. Bâti selon la revendication 1, **caractérisé en ce que** les côtés de cadre (2, 3, 4) forment un cadre triangulaire, de préférence d'un triangle rectangle.

3. Bâti selon la revendication 1 ou 2, **caractérisé en ce que** les pièces profilées porteuses (6, 7) sont disposées respectivement dans la zone extrême du côté de cadre (4) servant au support et à la fixation d'un module solaire (1) de sorte qu'elles peuvent se déplacer respectivement partiellement au-delà de l'extrémité du côté de cadre (4) sur ce côté de cadre.

4. Bâti selon une des revendications 1 à 3, **caractérisé en ce que**
le raccordement de la pièce profilée porteuse (7), disposée sur le côté de cadre (4) qui sert au support et à la fixation du module solaire (1), au côté de cadre (2) par le biais duquel s'effectue la fixation du toit et du sol s'effectue au moyen d'une pièce profilée porteuse (8) disposée de façon mobile sur le côté de cadre (2).

5. Bâti selon une des revendications 1 à 4, **caractérisé en ce que**
le raccordement entre les côtés de cadre (2) par le biais desquels s'effectue la fixation du toit et du sol et le côté de cadre (3) qui ne doit pas être fixé à la surface de toit ou de sol est formé par une pièce profilée porteuse (9) qui est raccordée de façon mobile sur le côté de cadre (2) par le biais duquel s'effectue la fixation du toit et du sol et de façon fixe au côté de cadre (3) qui ne doit pas être fixé à la surface de toit ou de sol.

6. Bâti selon une des revendications 1 à 5, **caractérisé en ce que**
le raccordement de la pièce profilée porteuse (6) du côté de cadre (4) qui sert au support et à la fixation du module solaire (1) au côté de cadre (3) qui ne doit pas être fixé à la surface de toit ou de sol est mobile et fixable.

7. Bâti selon une des revendications 1 à 6, **caractérisé en ce que**
les côtés de cadre (2, 3, 4) sont respectivement un profilé angulaire ou un profilé en U ou un profilé en T.

8. Bâti selon une des revendications 1 à 7, **caractérisé en ce que**
chaque pièce profilée porteuse (6, 7, 8, 9) est un profilé en T dont l'âme est constituée en tant que profilé en U dans la zone de transition vers le pied (13) et forme avec le pied (13) un profilé en caisson (14).

9. Bâti selon la revendication 8, **caractérisé en ce que**
le profilé en caisson (14) est, dans ses dimensions intérieures, conçu de sorte que le profilé respectif du côté de cadre (2, 3, 4) peut être déplacé et fixé dans le profilé en caisson (14) avec un léger jeu.

10. Bâti selon la revendication 8 ou 9, **caractérisé en ce que**
respectivement un module solaire (1) s'appuie sur un peu moins qu'un demi pied (13) et est fixé par une pince de module solaire (16) disposée de façon centrée dans le pied (13).

11. Bâti selon une des revendications 8 à 10, **caractérisé en ce que**
le pied (13) présente une surépaisseur (15) qui fait saillie de façon centrée dans le profilé en caisson (14).

12. Bâti selon une des revendications 1 à 11, **caractérisé en ce que**
le raccordement les unes aux autres des pièces profilées porteuses (6, 7, 8, 9) constitués en tant que profilé en T et le raccordement d'un profilé en T à un côté de cadre (3) s'effectuent respectivement dans la zone d'âme du profilé en T.

13. Bâti selon la revendication 7, **caractérisé en ce que**
le côté de cadre (3) non fixé à la surface de toit ou de sol (5) est un profilé en T, la moitié d'une largeur de pied servant respectivement à la fixation d'un habillage.

14. Bâti selon une des revendications 2 à 13, **caractérisé en ce que**,
par la rotation du bâti triangulaire composé des côtés de cadre (2, 3, 4) dans le plan de bâti, le côté de cadre (2) servant jusqu'à présent à la fixation sur la surface de toit ou de sol (5) sert de côté de cadre pour la fixation du module solaire (1) et inversement.
